# EUROPEAN PATENT APPLICATION

(11) **EP 2 219 411 A1**
(43) Date of publication of application: **18.08.2010**
(21) Application number: 10000627.9
(22) Date of filing: 22.01.2010
(51) Int. Cl.: H04W 76/02

(54) **Method of handling radio resource control connection establishment for a wireless communication system and related communication device**

(30) Priority: 22.01.2009 US 146318 P
(71) Applicant: HTC Corporation, Taoyuan City Taoyuan County (TW)
(72) Inventor: Wu, Chih-Hsiang, Taoyuan City Taoyuan County (TW)
(74) Representative: Görz, Ingo

(57) **Abstract**

A method of handling RRC connection establishment for a UE in a wireless communication system (10) is disclosed. The method includes starting a timer associated with access barring (302), stopping the timer associated with access barring and performing barring alleviation when a RRC message for the RRC connection establishment is received (304).

## Description

The present invention relates to a method and apparatus for handling data decryption in a wireless communications system according to the pre-characterizing clauses of claims 1 and 7.

A long-term evolution (LTE) system, initiated by the third generation partnership project (3GPP), is now being regarded as a new radio interface and radio network architecture that provides a high data rate, low latency, packet optimization, and improved system capacity and coverage. In the LTE system, an evolved universal terrestrial radio access network (E-UTRAN) includes a plurality of evolved Node-Bs (eNBs) and communicates with a plurality of mobile devices, also referred as user equipments (UEs).

In the LTE system, there is the need for a logical connection between the UE and the E-UTRAN. The logical connection provides a context for a particular network to UE communication link over which data may be transferred without miscommunication of the data to network elements or UEs in the system that are not intended to take part in the communication.

In the LTE system defined by 3GPP, the logical connection between the UE and the E-UTRAN is defined by radio resource control (RRC) connection states. The RRC connection states of the UE contain an RRC_IDLE state and an RRC_CONNECTED state. When the UE in the RRC_IDLE state attempts to setup an RRC connection with the E-UTRAN, the UE has to initiate an RRC establishment procedure. The process of exchanging related RRC messages is described as follows. Firstly, the UE sends an RRC CONNECTION REQUEST message to the E-UTRAN. If the E-UTRAN accepts the request for connection establishment, the E-UTRAN sends an RRC CONNECTION SETUP message. Accordingly, the UE applies the related configuration setting according to the RRC CONNECTION SETUP message, and then sends back with an RRC CONNECTION SETUP COMPLETE message to notify the E-UTRAN that the related configuration setting is done.

In addition, the RRC CONNECTION REQUEST message includes an RRC connection establishment cause. The eNB uses the RRC connection establishment cause to prioritize the RRC connection request from the UE, e.g. at high load situations. Currently, in the LTE system, RRC connection establishment causes are defined as follows: an emergency call, high priority access, a Mobile Terminating (MT) call, Mobile Originating (MO) signaling and a MO call.

Nevertheless, when being establishing the RRC connection for certain RRC connection establishment causes, the UE starts a timer, such as a timer T302, T303 or T305 and draws a random number "rand", which is uniformly distributed in the range 0□rand <1. A timer value T is a period of time that the UE has to wait for and given by: T = (0.7+0.6*rand)* access barring time. The access barring time is configured by E-UTRAN. When one of those timers is running, upper layers are notified access barring for the MT calls, MO calls or MO originating signaling. In the prior art, when receiving the RRC CONNECTION SETUP message, the UE stops any of timers T303, T302, and T305 if the timer is running, but the UE does not perform barring alleviation for the MT calls, MO calls or MO originating signaling. Thus, the UE is not allowed to perform another MO call, MT call or MO originating signaling although the RRC connection has been established. For example, the UE is not able to make a MO call due to requests from upper layer after the RRC connection has been established although the timer T303 has been stopped. The range of access barring time is from 4 seconds to 512 seconds. If the access barring time is configured to 512 seconds and a rand is 0.5, the UE can make a MO call after waiting 373.76 ( (0.7+0.6*0.5)*512) seconds. This is a serious drawback because a phone call cannot be made within several minutes when the UE has the RRC connection.

To put it simply, in the prior art, the UE is not able to make a phone call in spite of the RRC connection established since the UE does not perform barring alleviation when receiving the RRC CONNECTION SETUP message.

This in mind, the present invention aims at providing a method and apparatus for handling radio resource control (RRC) connection establishment for a user equipment (UE) in a wireless communication system, so as to avoid a call delay.

This is achieved by a method and apparatus for handling radio resource control (RRC) connection establishment for a user equipment (UE) in a wireless communication system according to claims 1 and 7. The dependent claims pertain to corresponding further developments and improvements.

As will be seen more clearly from the detailed description following below, the claimed method for handling radio resource control (RRC) connection establishment for a user equipment (UE) in a wireless communication system comprises starting a timer associated with access barring, and stopping the timer and performing barring alleviation for the access barring when a RRC message for the RRC connection establishment is received.

### Brief Description of the Drawings

FIG. 1 is a schematic diagram of an exemplary wireless communication system.
FIG. 2 is a schematic diagram of an exemplary communication device.
FIG. 3 is a flowchart of an exemplary process.
FIG. 4 is an exemplary sequence diagram of RRC connection establishment.

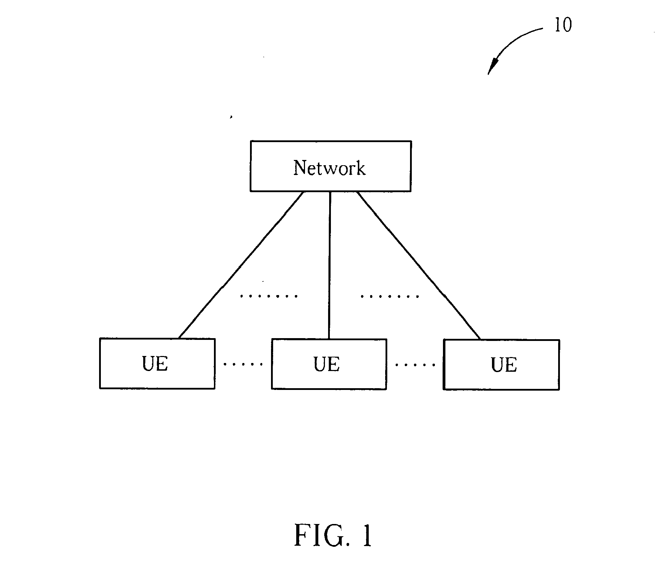

Please refer to FIG. 1, which is a schematic diagram of an exemplary wireless communication system 10. The wireless communication system 10, such as an LTE (long-term evolution) system or other mobile communication systems, is briefly composed of a network and a plurality of user equipments (UEs). In FIG. 1, the network and the UEs are simply utilized for illustrating the structure of the wireless communication system 10. Practically, the network comprising a plurality of base stations, such as an E-UTRAN (evolved-UTAN) comprising a plurality of evolved Node-Bs (eNBs) in the LTE system. The UEs can be devices such as mobile phones, computer systems, etc. Besides, the network and the UE can be seen as a transmitter or receiver according to transmission direction, e.g., for uplink, the UE is the transmitter and the network is the receiver, and for downlink, the network is the transmitter and the UE is the receiver.

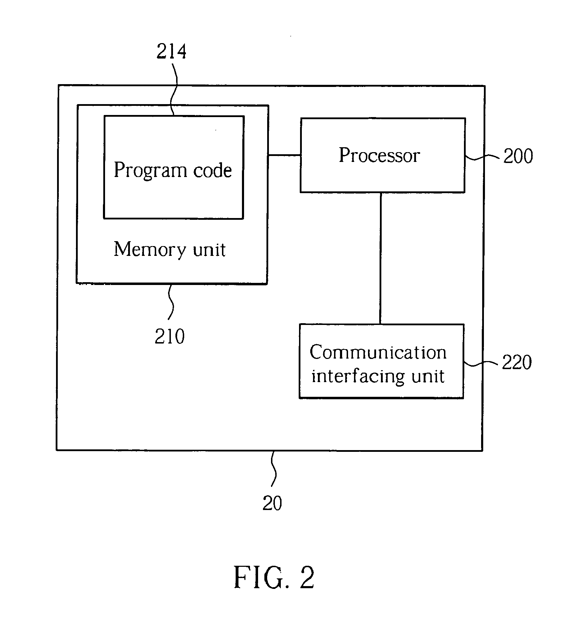

FIG. 2 is a schematic diagram of an exemplary communication device 20. The communication device 20 can be the UE shown in FIG. 1 and may include a processor 200 such as a microprocessor or ASIC, a memory unit 210, and a communication interfacing unit 220. The memory unit 210 may be any data storage device that can store program code 214, for access by the processor 200. Examples of the memory unit 210 may include but are not limited to a subscriber identity module (SIM), read-only memory (ROM), random-access memory (RAM), CD-ROMs, magnetic tapes, hard disks, and optical data storage devices. The communication interfacing unit 220 is preferably a radio transceiver for wirelessly communicating with the network according to processing results of the processor 200.

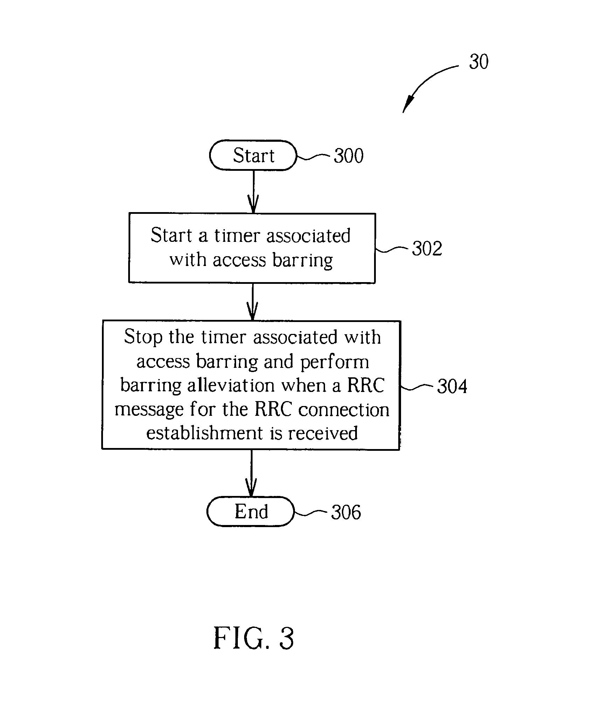

Please refer to FIG. 3, which is a flowchart of an exemplary process 30. The process 30 is utilized for handling radio resource control (RRC) connection establishment for a UE in the wireless communication system 10 and can be compiled into the program code 214. The process 30 includes the following steps:
Step 300: Start.
Step 302: Start a timer associated with access barring.
Step 304: Stop the timer associated with access barring and perform barring alleviation when a RRC message for the RRC connection establishment is received.
Step 306: End.

According to the process 30, the UE starts the timer to perform access barring. When the RRC message is received, the UE stops the timer if the timer is running. In the meantime, the UE performs the barring alleviation for alleviating the access barring.

For example, the RRC message is a RRC CONNECTION SETUP message. The timer could be one of the timers T302, T303 and T305. In addition, when the UE establishes the RRC connection for MO calls and both of the timers T302 and T303 are not running, the timer T303 is started. When the UE establishes the RRC connection for MO signaling and the timers T302 and T305 are not running, the timer T305 is started. In other words, the timer T302 is used for access barring, corresponding to the MT calls. The timer T303 is used for access barring, corresponding to the MO calls. The timer T305 is used for access barring, corresponding to the MO signaling.

To put it in another way, when the UE receives the RRC CONNECTION SETUP message and any of timers T302, T303, and T305 is running, the UE stops the running timers and performs barring alleviation for at least one of MT calls, MO calls and MO signaling.

Thus, the UE stops any of the running timers, such as T302, T303 and T305 when the RRC CONNECTION SETUP message is received. Meanwhile, the UE performs barring alleviation to avoid that another phone call is prohibited when the RRC connection has been established. Thus, the UE is able to make a phone call when a call request is received after the successful RRC connection establishment.

For the barring alleviation, the UE can notify a non access stratum (NAS) layer of the UE that access for the MT calls, the MO calls and the MO signaling are granted. When a new call request is received, the NAS layer permits the call request, and the UE makes another call connection with the network.

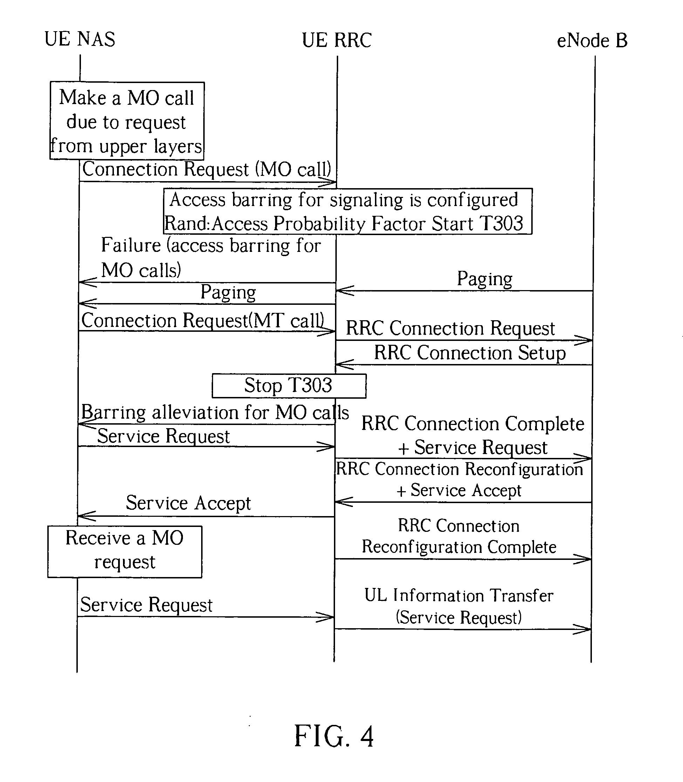

Please refer to FIG. 4, which is an exemplary flow chart of RRC connection establishment. In FIG.4, an eNodeB initially has access barring for MO calls/signaling and thereby broadcasts a System information block type 2 including an "accessBarringForOriginatingCalls" providing an access probability factor. A UE NAS layer sends a CONNECTION REQUEST to a UE RRC layer for making a MO call when receiving a request from upper layers, e.g. an application layer. In this situation, the UE draws a random number "rand" and then access barring for MO signaling is configured since the random number "rand" is greater than the access probability factor. The UE starts a timer T303 for access barring for the MO call. And the UE RRC layer sends a FAILURE to inform the UE NAS layer about the access barring. Soon later, a MT call is initiated by the eNodeB. The eNodeB pages the UE RRC layer transferring the paging information to the UE NAS. The UE NAS accordingly sends a CONNECTION REQUEST for the MT call to the UE RRC layer for responding the paging. When the UE RRC layer receives the CONNECTION REQUEST, the UE RRC layer sends a RRC CONNECTION REQUEST message to the eNodeB. The eNodeB accepts the request for connection establishment, and thus sends an RRC CONNECTION SETUP message. When the RRC CONNECTION SETUP message is received, the UE RRC layer stops the timer T303 and performs barring alleviation for MO calls by sending barring alleviation information to the UE NAS. Then the UE NAS initiates a service request procedure by sending an SERVICE REQUEST. The UE RRC layer sends RRC CONNECTION SETUP COMPLETE message plus the SERVICE REQUEST to notify the eNodeB. The eNodeB does not have MO access barring at this time and thereby accepts the SERVICE REQUEST. To notify the acceptance and to establish radio bearers other than SRB1 (Signaling Radio Bearer 1), the eNodeB initiates an RRC connection reconfiguration procedure by sending RRC CONNECTION RECONFIGURATION plus a SERVICE ACCEPT to the UE RRC layer. Then, the UE RRC sends SERVICE ACCEPT and RRC CONNECTION RECONFIGURATION COMPLETE to the UE NAS layer and the eNodeB, respectively. The UE RRC informs the UE NAS the service is accepted. Again, the UE NAS receives another MO request. Since the access barring for the MO call has been alleviated, the MO call is able to be configured. The UE NAS and RRC then perform related procedures for the MO call, e.g. a service request procedure. As can be seen from the above, the UE stops the T303 and performs barring alleviation for the MO calls when the RRC CONNECTION SETUP message is received.

Please note that the abovementioned steps including suggested steps can be realized by means that could be hardware, firmware known as a combination of a hardware device and computer instructions and data that reside as read-only software on the hardware device, or an electronic system. Examples of hardware can include analog, digital and mixed circuits known as microcircuit, microchip, or silicon chip. Examples of the electronic system can include system on chip (SOC), system in package (Sip), computer on module (COM), and the communication device 20 in which the processor 200 processes the program code 214 related to the abovementioned processes.

To sum up, when the UE receives the RRC CONNECTION SETUP message and any of timers T302, T303, and T305 is running, the UE stops the running timers and performs barring alleviation for at least one of the MT calls, MO calls and MO signaling. Compared with the prior art, the UE, thus, is able to make another phone call when the RRC connection has been established.

## Claims

1. A method of handling radio resource control (RRC) connection establishment for a user equipment (UE) in a wireless communication system (10), **characterized by** the method comprising:
starting a timer associated with access barring (302); and
stopping the timer and performing barring alleviation for the access barring when a RRC message for the RRC connection establishment is received (304).

2. The method of claim 1, **characterized in that** the RRC message is a RRC Connection Setup message.

3. The method of claim 1 or 2, **characterized in that** the timer is a timer T302, a timer T303, or a timer T305.

4. The method of any one of claims 1 to 3, **characterized in that** performing barring alleviation comprises performing barring alleviation for at least one of mobile terminating calls, mobile originating calls and mobile originating signaling.

5. The method of claim 4 further comprising notifying a non access stratum layer of the UE that access for at least one of the mobile terminating calls, the mobile originating calls and the mobile originating signaling are granted.

6. The method of any one of claims 1 to 5 further comprising making a call when a call request is received.

7. A communication device (20) of a wireless communication system (10) for accurately handling RRC connection establishment, **characterized by** the communication device (20) comprising:
means for starting a timer associated with access barring; and
means for stopping the timer and performing barring alleviation for the access barring when a RRC message for the RRC connection establishment is received.

8. The communication device (20) of claim 7, **characterized in that** the RRC message is a RRC Connection Setup message.

9. The communication device (20) of claim 7 or 8, **characterized in that** the timer is a timer T302, a timer T303, or a timer T305.

10. The communication device (20) of any one of claims 7 to 9, **characterized in that** the means for performing barring alleviation comprises means for performing barring alleviation for at least one of mobile terminating calls, mobile originating calls and mobile originating signaling.

11. The communication device (20) of claim 10 further comprising means for notifying a non access stratum layer of the UE that access for at least one of the mobile terminating calls, the mobile originating calls and the mobile originating signaling are granted.

12. The communication device (20) of any one of claims 7 to 11 further comprising means for making a call when a call request is received.

13. A memory unit storing program code which when executed on a processor, implement the method of any one of claims 1 to 6.
